(19) **Europäisches Patentamt / European Patent Office / Office européen des brevets**

(11) **EP 2 693 897 B1**

(12) **EUROPEAN PATENT SPECIFICATION**

(45) Date of publication and mention
of the grant of the patent:
**16.11.2016 Bulletin 2016/46**

(21) Application number: **11862799.1**

(22) Date of filing: **01.04.2011**

(51) Int Cl.:
**B02B 1/06** *(2006.01)*          **A23L 33/00** *(2016.01)*
**A23L 7/10** *(2016.01)*          **A23L 7/152** *(2016.01)*

(86) International application number:
**PCT/CN2011/000565**

(87) International publication number:
**WO 2012/129733 (04.10.2012 Gazette 2012/40)**

(54) **METHOD AND SYSTEM FOR MULTI-STAGE STABILIZATION OF WHOLE GRAIN FLOUR**

VERFAHREN UND SYSTEM ZUR MEHRSTUFIGEN STABILISIERUNG VON VOLLKORNMEHL

PROCÉDÉ ET SYSTÈME DE STABILISATION EN PLUSIEURS ÉTAPES DE LA FARINE COMPLÈTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.02.2014 Bulletin 2014/07**

(73) Proprietor: **Intercontinental Great Brands LLC
East Hanover, NJ 07936 (US)**

(72) Inventors:
• **SUN, Feng
  Jiangsu 215131 (CN)**
• **DAI, Yuliang
  Shanghai 200081 (CN)**
• **JIN, Yonjun
  Shanghai 200333 (CN)**
• **GU, Manhu
  Shanghai 200072 (CN)**

(74) Representative: **Boult Wade Tennant
Verulam Gardens
70 Gray's Inn Road
London WC1X 8BT (GB)**

(56) References cited:
WO-A1-2007/149320          CN-A- 1 810 126
CN-A- 101 218 938          CN-A- 101 356 959
CN-A- 101 623 063          CN-A- 101 658 205
US-A- 5 066 506          US-A1- 2005 136 173
US-A1- 2006 073 258          US-B1- 6 616 957

• ROSE DEVIN J ET AL: "Enhanced lipid stability
in whole wheat flour by lipase inactivation and
antioxidant retention", CEREAL CHEMISTRY,
AACC INTERNATIONAL INC, US, vol. 85, no. 2, 1
March 2008 (2008-03-01), pages 218-223,
XP009180317, ISSN: 0009-0352
• KERMASHA S ET AL: "COMPARISON OF
MICROWAVE, CONVENTIONAL AND
COMBINATION HEAT TREATMENTS ON WHEAT
GERM LIPASE ACTIVITY", INTERNATIONAL
JOURNAL OF FOOD SCIENCE AND
TECHNOLOGY, BLACKWELL SCIENTIFIC
PUBLICATIONS, OXFORD, GB, vol. 28, no. 6, 1
January 1993 (1993-01-01), pages 617-623,
XP002043636, ISSN: 0950-5423

**Description**

FIELD

The present method and system relate to a multi-stage treatment of whole grain flour to reduce enzyme activity, and more specifically, the rapid treatment of whole grain flour to reduce lipase enzyme activity for increasing shelf-life.

BACKGROUND

Whole grains are a good source of vitamins, nutrients, and dietary fiber, and are often desired in food products. Whole grains are generally considered to be grains that include all of the components of the grain berry in their naturally occurring amounts. The components that constitute the whole grain are the endosperm, bran, and germ. In general, the endosperm contains mostly starch and a smaller amount of oils and lipids. The bran and germ contain relatively large amounts of lipid and enzymes as compared to the endosperm. However, once whole grains are milled to provide whole grain flour, the shelf-life of the whole grains may be diminished. When the whole grain is milled, the compartments separating the bran, germ, and endosperm are broken up such that the lipid containing portions and enzymatic components of the grain are brought into contact In general, the endosperm contains mostly starch and a smaller amount of oils and lipids. The bran and germ contain relatively large amounts of lipid and enzymes as compared to the endosperm. For example, enzymes that are generally found in the bran and germ include lipase and lipoxygenase. Once the grain is milled, the contact of the lipid and enzyme components upon the break down of the compartments during milling results in increased levels of oxidation and development of rancidity over time.

White flours, or those that have had most or all of the bran and germ removed, are generally more stable than whole grain flours due to the significant absence of the enzyme and lipid rich bran and germ portions. Whole grain flours, however, which include the endosperm, as well as the bran and germ, tend to become rancid upon extended period of storage due to the enzymatic breakdown of oils and lipids contained in the flour. This can result in the formation of undesirable tastes and odors, as well as poor baking and functional qualities.

Prior attempts have been made to deactivate the enzymes in whole grain flour, but these processes tend to be time consuming or possibly damaging to certain components of the flour when attempting to achieve a significant amount of enzyme deactivation. In one approach, bran and/ or germ can be subjected to a steam treatment to deactivate the enzyme activity in the bran and/ or germ. However, such prior steam treatment processes have the limitation that they often take an hour or more of treatment time and require extensive and costly equipment. Even with such long treatment times, steam treatment methods may not completely deactivate the enzymes. In other cases, steaming may be limited in order to maintain moisture content during stabilization so that swelling of the bran particles does not occur. In other prior approaches, whole berries can be water washed and then subjected to a microwave treatment. In such cases, however, the microwave treatment of the whole berries is intended to reduce gluten content contained in the endosperm of the wheat berry as well as inactivate enzymes. However, such prior microwave treatment methods also have the shortcoming that they are not sufficiently robust enough to completely deactivate enzymes.
CN101658205 discloses a continuous enzyme inactivation method for grain germ. CN101218938 discloses a method for restraining oat lipase.

XP009180317 (Rose et al, "Enhanced lipid stability in whole wheat flour by lipase inactivation and antioxidant retention, CEREAL Chemistry, 2008) discloses the effectiveness of heat, steam and microwave treatment in decreasing lipase activity.

SUMMARY

A method is described herein of providing a method of providing a whole-grain flour having reduced lipase enzyme activity using a multi-stage deactivation process in a grain processing system, the system comprising:

    a hydration chamber arranged and configured to provide steam hydration;
    a microwave chamber after the hydration chamber;
    a breaking device positioned between the hydration chamber and the microwave chamber;
    a conveyor connecting the hydration chamber to the microwave chamber;
    the method comprising:

        separating a flour fraction having endosperm from a milled bran fraction having bran and germ, the milled bran fraction having a lipase enzyme activity;
        subjecting the milled bran fraction to a steam treatment step, whereby the bran fraction is exposed to steam having a temperature of 100 to 150°C and a pressure of 16.54kPa to 337.8kPa (2.4 to 49 psi) for 60 to 180 seconds, in the hydration chamber effective to hydrate the milled bran fraction and to deactivate a first portion of the lipase enzyme activity to provide a hydrated bran fraction;

conveying the hydrated bran fraction to the breaking device to break apart any agglomerates of the hydrated bran fraction that form in the hydration chamber;

subjecting the hydrated bran fraction to a drying treatment step using microwave energy at 5 kW to 100 kW at 915 MHz to 20 GHz for 60 to 180 seconds in the microwave chamber effective to dry the hydrated bran fraction and to deactivate a second portion of the lipase enzyme activity to provide a treated bran fraction, whereby the lipase enzyme activity in the treated bran fraction is reduced relative to the milled bran fraction by 77 to 100 percent; and combining the treated bran fraction with the separated flour fraction to provide a whole-grain flour having reduced lipase enzyme activity; and

wherein a total time of the combined steam and drying treatment steps is less than 600 seconds.

## BRIEF DESCRIPTION OF THE DRAWINGS

FIG. 1 is a flow chart of a two-stage whole grain treatment system;

FIG. 2 is another flow chart of a two-stage whole grain treatment system;

FIG. 3 is a side view of an exemplary hydration chamber;

FIG. 4 is a side view of an exemplary microwave chamber;

FIG. 5a is cross-sectional view of an exemplary breaking device for reducing agglomerates; and

FIG. 5b is a top view of the breaker.

## DETAILED DESCRIPTION

A method is provided for the stabilization of whole grain flow through a rapid treatment of at least portion of the whole grains to reduce enzyme activity for improving shelf-life thereof. The process is configured to reduce at least lipase enzyme activity in whole grain flour relative to a starting lipase enzymatic activity after a combination of rapid treatments configured to achieve a high level of deactivation in a relatively short amount of time.

The process includes a multi-stage treatment for the deactivation of enzymes where a total treatment time is 600 seconds or less to reduce lipase enzyme activity. Even in such short amounts of time, the process is effective to achieve high levels of enzyme deactivation of 77 to 100 percent, and in other cases, about 90 to about 100 percent relative to the starting materials. The process includes two treatment steps with one of the treatment steps being a short steam hydration effective to hydrate at least portions of the whole grain and deactivate at least a portion of the enzymes at the same time. This first treatment step is then be followed with a second treatment step using microwave energy where the hydrated fractions from the first step are further deactivated with effective amounts of microwave energy. Total time of both treatment steps is 600 seconds or less, in some cases, about 120 to about 360 seconds, and in other cases about 240 to about 360 seconds, providing a high level of enzyme deactivation in a very short amount of time. By using the unique combination of multiple treatment steps to deactivate, the process is advantageous because it may use smaller, less complex equipment enabling a process to produce stabilized whole grains with a relatively low capital investment.

The method is provided to rapidly reduce the enzyme activity of whole grain flour using a two-stage deactivation. In this approach, a bran fraction of the whole grain flour is subjected to a first deactivation step followed by a second deactivation step to sequentially deactivate enzymatic activity. The treated bran fraction is then recombined with a separated flour fraction to provide whole grain flour having a reduced lipase enzyme activity.

In general, it has been discovered that whole grain flour having a reduced lipase enzymatic activity can be rapidly provided when subjected to at least two separate and sequential stages of treatment as described herein. Particularly, the two-stages work synergistically and are effective in combination to accomplish various functions that relate to the hydration and deactivation of enzyme activity in the whole grain flour and also selection of desired moisture contents.

The grain processing system is provided for the rapid deactivation of a lipase enzyme in a whole grain within a short amount of time. The system includes a hydration chamber arranged and configured to provide hydrating steam effective to hydrate a milled bran fraction containing both bran and germ. The hydrating steam is also effective to deactivate at least a portion of the lipase activity of the bran fraction. The system also includes a microwave chamber provided after the hydration chamber. The microwave chamber is arranged and configured to dry the hydrated bran fraction including both bran and germ and to further deactivate the lipase enzyme activity in the hydrated bran fraction.

The system also includes a breaking device between the hydration chamber and the microwave chamber. The breaking device is arranged and configured to break apart any agglomerates of the hydrated bran fraction that may form in the hydration chamber. Further provided in the system is one or more conveyors connecting the hydration chamber to the microwave chamber. The one or more conveyors are arranged and configured to convey the bran fraction at least from the hydration chamber through the microwave chamber. The hydration chamber and the microwave chamber are configured to reduce the lipase enzyme activity of the bran by 77 to 100 percent, and in yet other cases about 90 to about 100 percent relative to the milled bran fraction in less than 600 seconds.

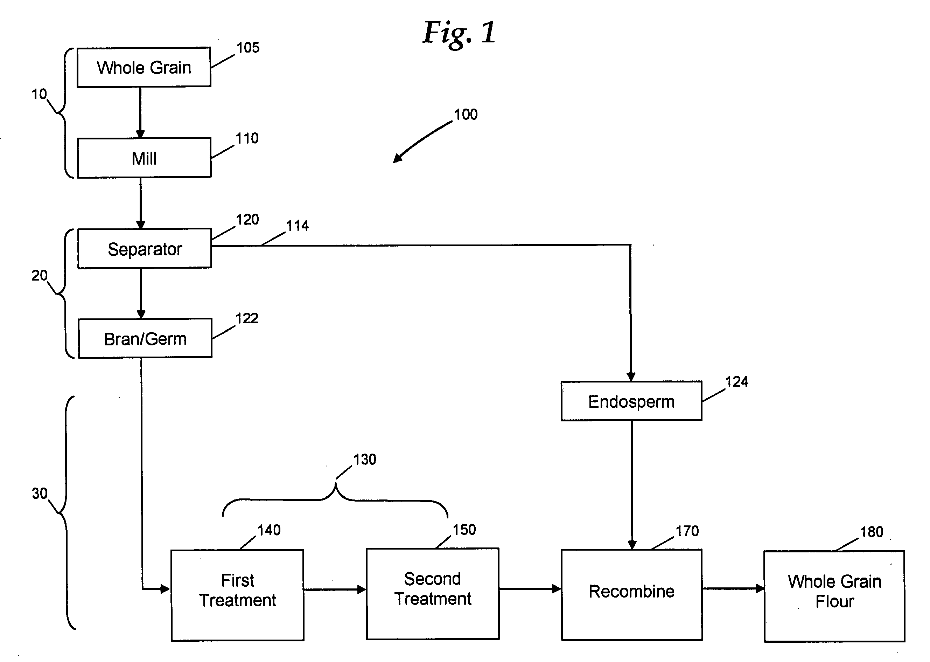

Turning to more of the specifics, one example of a rapid enzyme deactivation process 100 is depicted in the flow chart provided in FIG. 1. In general, the process 100 includes a grinding or milling section 10, a scaling and separation section 20, and a rapid stabilization section 30. The process 100 may start with whole grains 105 that have an initial lipase enzyme activity. The starting whole grains 105 include all portions of the grain including the endosperm, bran, and the germ Next, the whole grains 105 are sent to the grinding or milling section to be ground or milled 110 to a desired particle size. After milling, the ground whole grains are sent to the scaling or separation section 20 where a flour fraction 114 containing the endosperm 124 is separated 120 from a bran fraction 122 that contains the bran and the germ. The bran fraction, and in particular the bran thereof, contains the majority of the lipase from the whole grains. After separation, the bran fraction 122 is processed through the rapid stabilization section to deactivate the enzymes commonly found in the bran.

One aspect of the process 100 utilizes a multi-stage, and in one approach, a two-stage treatment 130 to achieve a rapid deactivation of a majority of and, in some cases, substantially all of the initial lipase enzyme activity contained in the bran fraction of the whole grain in a relatively short amount of processing time, in part, due to an effective ratio of processing times and conditions in sequential treatment steps. The bran fraction 122 is first subjected to a first or pre-treatment step 140 using conditions effective to both hydrate the bran fraction and to deactivate a first portion of the enzyme activity. The hydrated bran fraction is then subjected to a second treatment step 150 that uses microwave energy under conditions effective to further deactivate the enzyme activity in the treated bran fraction. This two-stage hydration/ deactivation has selected conditions and a ratio of processing times effective to provide deactivation of 77 to 100 percent, and in other cases about 90 to about 100 percent in the treated bran fraction relative to the starting bran fraction in a very short amount of time. In the two-stage treatment, the total time of the combined first and second treatment steps is less than 600 seconds (in some cases, about 120 seconds to about 360 seconds, and in other cases about 240 to about 360 seconds) to provide a high level of enzyme deactivation. The treated bran fraction is then recombined 170 with the previously separated flour fraction 114 to provide the whole grain flour 180 having a reduced lipase enzyme activity.

By one approach, the enzymes deactivated by the method may include lipase, lipoxygenase, peroxidases, and any other enzymes naturally found in the whole grain. In another approach, the methods described herein are effective to provide a high level of lipase enzyme reduction. With regard to lipase, the two-stage treatment process is effective to deactivate enzymes in the bran fraction by 77 to 100 percent, in other approaches, about 90 to about 100 percent, in yet other approaches, about 95 to about 100 percent, and in yet other approaches, about 100 percent.

Whole grains that may be used in the present process and system may include, for example, wheat, oat, barley, maize, rice, rye, spelt, millet, quinoa, triticale, amaranth, teff, corn, buckwheat, bulgar, sorghum and mixtures thereof. By one approach, the process is applicable to any and all types of whole grain wheat. Although not limited thereto, the wheat berries may be selected from soft/soft and soft/hard wheat berries. They may comprise white or red wheat berries, hard wheat berries, soft wheat berries, winter wheat berries, spring wheat berries, durum wheat berries, or combinations thereof.

Each process step of the methods herein will now be described in more detail by reference to FIGS. 1-5. In the milling and grinding section 10, the whole grain 105 may be milled, ground, or comminuted in milling equipment 210 to obtain ground whole grains. The whole grains may be cleaned by washing with water. By some approaches, moisture contents from about 11 percent by weight to about 15 percent by weight may be effective for milling or grinding purposes, with moisture contents of about 12 percent being suitable in some cases. Natural whole grains, such as wheat berries, generally have moisture contents from about 10 percent by weight to about 15 percent by weight. Accordingly, if wheat berries are used, the whole berries may not need to be moistened or tempered to achieve a suitable moisture content prior to milling or grinding.

The milled, ground, or comminuted whole grains may be subjected to separating or screening operations in the scaling and separation sections 20 to obtain a flour fraction and a bran fraction of desired particle sizes. By one approach, the milled whole grains may be passed through a series of screens 212, 214, 216 to sift the milled whole grains and obtain the flour and bran fractions based on the particle sizes of the milled whole grains. By one example, a series of sifting screens may be used to separate the flour and bran fractions. To complete the separation, a first screen 212 may have aperture sizes of about 1000 $\mu$m, followed by a second screen 214 having aperture sizes of about 200

μm, and followed by a third screen 216 having an aperture size of about 160 μm. Other screen sizes may be used as appropriate. Generally, the bran fraction, which tends to have larger particle sizes following milling, is enriched in bran and germ and may also contain small amounts endosperm. By one approach, the bran fraction contains only bran and germ. The bran fraction is retained in the larger sifting screens. The flour fraction is predominately endosperm, but may also contain a small amount of bran and germ. By one approach, the flour fraction contains only endosperm. The flour fraction passes through the larger screens.

In other embodiments, the whole grains may be initially milled, and then passed through a first set of screens. The larger particles will generally contain the bran fraction comprising bran and germ and the smaller particles will generally contain flour fraction containing endosperm. These fractions may then be further milled separately and then screened to obtain the desired particle size depending on the end use of the whole grain flour to be obtained.

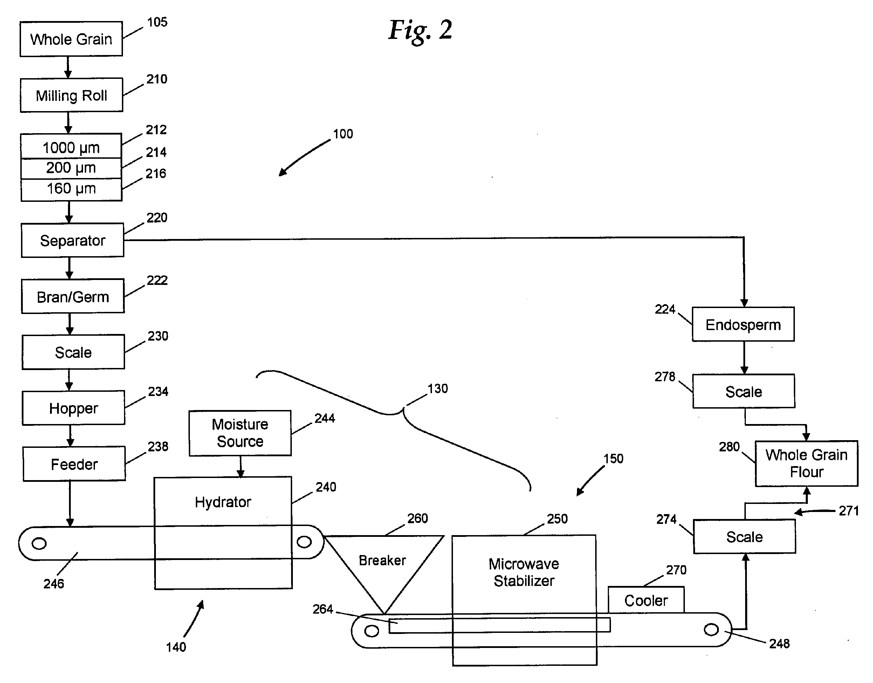

As a result of the screening, the individual fractions may be separated 220 such that the flour fraction containing the endosperm 224 can be separated from the bran fraction. As shown in FIG. 2, the bran fraction containing the bran and germ 222 proceeds along a second process line separate from the flour fraction. The flour fraction is not passed through the rapid or multi-stage treatment section 130 while the bran fraction 222 is treated as described herein. The bran fraction 222 may be passed through a scale 230, a hopper 234, and feeder 238 to dose an amount of the bran faction including both bran and germ to the multi-stage treatment section 130 of the process 100.

If desired, the bran fraction may be weighed 230 to determine whether the milling operation is effectively removing the bran fraction from the milled whole grain. For example, a wheat kernel may include about 68 to about 85 percent (in some cases about 83 percent) endosperm, and about 15 to about 32 percent bran fraction which may include about 1.5 to about 3.5 percent germ and the remainder comprised of bran. For example, the wheat kernel may contain about 14 percent bran, and about 3 percent germ by weight. Therefore, during the scaling of the bran fraction prior to the first treatment step, the bran fraction may have a weight that is approximately 17 percent of the whole grain starting weight. Deviations from the target weight of the bran fraction may be accounted for by adjusting the milling and screening processes describe above.

The bran and germ in the bran fraction 222 may then be placed in a hopper 234 to hold any excess bran fraction waiting to be processed. The hopper 234 may be provided with a feeder 238 in-line with, or attached thereto, and effective to provide the bran fraction to the multi-stage treatment section 130 in a metered amount and at the desired bed depth, to be discussed further below, effective for treatment and deactivation. The hopper 234 and/or feeder 238 may be configured to vibrate to more effectively provide a consistent and even bed depth to the treatment section 130.

The treatment section 130 may include a first treatment step or pre-treatment 240 of the multi-stage treatment. The first treatment is configured to hydrate the bran fraction 222 and to deactivate a first portion of the lipase enzyme activity in the bran fraction 222. By one approach, the hydration and deactivation may occur in a hydration chamber 240 which subjects the bran fraction to an increased moisture environment such that the bran fraction absorbs at least some of the moisture into the bran fraction particles. The hydration chamber 240 may be an enclosed structure with an entrance and exit provided for the bran fraction entering the chamber to be treated and exit the chamber after treatment, respectively. The chamber 240 may use a conveyor belt 246 or other transportation device to pass the bran fraction 222 through the chamber. Alternatively, the hydration chamber 240 may be a location along the process line where the first treatment step occurs. The hydration chamber 240 may be connected to a moisture source 244 for supplying moisture in the form of water vapor, steam, and the like to the hydration chamber and generating the increased moisture environment. By one approach, the hydration is supplied by steam.

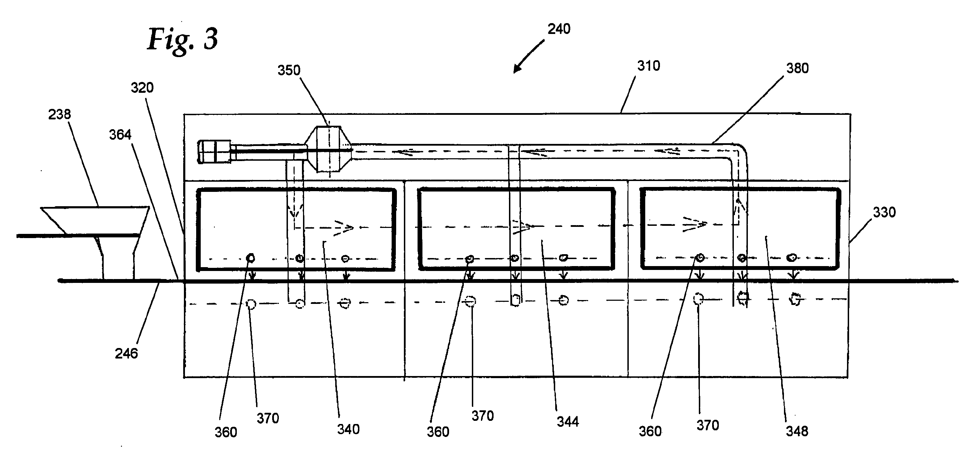

As shown in FIG. 3, an exemplary hydration chamber 240 is shown. The chamber 240 includes an enclosure 310 having an entrance 320 and exit 330 thereto with the conveyor belt 246 passing therethrough. The feeder 238 is positioned on one end of the conveyor to deposit the bran fraction onto the conveyor. By one approach, the hydration chamber has multiple sections or zones 340, 344, 348, such as three consecutive zones. In one approach, all the zones one 340, two 344 and three 348 could provide direct steam hydration or indirect stream hydration via a recirculation fan 350 to the bran 222 passing through the chamber. As the bed of bran passes through the hydration chamber 240, it sequentially passes through each of the hydration zones.

By one approach, each of the hydration zones 340, 344, 348 is provided with a hydration manifold positioned above the conveyer belt 246. For example, zones one 340, two 344, and three 348 each have a hydration manifold 360 positioned above the conveyor belt 246 to provide hydrating steam to a top portion of a bran fraction bed 364 deposited on the conveyor belt 246. The hydrating steam therefore contacts the bran fraction bed 364 along its upper surface. By one approach, the bed depth of the bran fraction is selected such that the entire depth of the bran fraction may be treated. Next the bran passes through zone three 348 to provide additional hydration and deactivation.

The conveyer belt 246 may be provided such that the belt is a steam permeable mesh. The size of the mesh of the conveyer belt should be such that the bran fraction particles do not fall through, but of sufficient size to allow the steam to freely pass through the belt 246. Therefore, as described above, the steam may pass through the bran fraction bed from the top to the bottom and through the conveyor belt as needed to effectively hydrate the bran.

Alternatively, or in addition to the upper manifolds 360, the zones may have a hydration manifold 370 positioned below the bran fraction and below the upper portion of the conveyor belt 246. The hydration steam from this manifold passes through the bran fraction bed 364 from the bottom to the top and through the conveyor belt 246. For example, a downwardly directed steam could be provided in zones one 340 and two 344 and upwardly directed steam could be provided in zone three 348 (or any combination thereof). Zones two and three 344, 348 also may have a recirculation line 380 that redirects hydrating steam and moisture via a recirculation fan 350 back to any of the zones as needed to supplement and/or provide indirect hydrating steam. For example, the first zone 340 may be provided with indirect steam or hydration for the bran as it initially enters the hydration chamber. Such a recirculation design can provide energy and time savings, which in effect may result in reduced manufacturing costs.

By one approach, the conveyor belt is configured to run at about 1 to about 5 m/minute and, in other cases, about 1 to about 3 m/minute. In some cases, small amounts of endosperm that may be present in the bran fraction become sticky when exposed to steam and can cause undesired sticking of the bran fraction to the belt. Therefore, in some aspects the conveyer belts 246, 248 are made of a material that does not stick to the bran fraction passing through the treatment section 130. The belts may have a coating or other non-stick surface. Moreover, as discussed above, the conveyers may optionally be provided from a mesh material that has a pore size which allows steam to pass through but retains the bran fraction on the belt. Such an arrangement can provide an increased level of hydration and deactivation to the bran fraction passing through the hydrator 240.

It has been determined that steam treatment of the bran fraction 122 provides more effective hydration and deactivation as compared to submerging the bran fraction in liquid water. Steam has been found to be more efficient at penetrating the bran fraction particles to provide selective hydration to the entire particle in a relatively shorter amount of time. Liquid water also has not been found to provide the levels of rapid deactivation provided by the described steam treatment. Additionally, contacting the bran fraction with liquid water has been found to result in increased levels of agglomeration of the bran fraction. The formation of agglomerates can result in the subsequent microwave treatment being less effective and prevent a uniform drying of the bran fraction.

By one approach, the hydration chamber 240 may use steam in the first treatment step 240 to both hydrate the bran fraction and deactivate a portion of the lipase enzyme activity at the same time. The steam may be provided to the hydration chamber 240 from a steam source 244. The steam in the hydration chamber has a temperature of 100 to 150°C, in other approaches about 110 to about 130°C, and in yet other approaches about 115 to about 120°C. The steam is provided at a pressure of 16.54 kPa to 337.8 kPa (2.4 psi to 49 psi). In some instances, the steam provides a relative humidity in the chamber of about 85 to about 100 percent, and in some cases, about 90 to about 95 percent.

As indicated, the first treatment step is effective to hydrate the bran fraction to provide a hydrated bran fraction. Prior to the first treatment step, the bran fraction typically has a moisture content of about 10 percent by weight to about 15 percent by weight, and in some cases, a moisture content of about 12 weight percent. Following the first treatment step, the moisture content of the hydrated bran fraction is about 13 to about 20 percent, in some cases, about 13 to about 19 percent, in other instances about 15 to about 17 percent. By another approach, the hydration chamber 240 is configured and effective so that of the moisture content of the bran fraction 222 is increased by about 25 percent to about 42 percent relative to the moisture content of the starting bran fraction.

The treatment time for the bran fraction in first treatment step 240 is 60 to 180 seconds, and in other cases about 180 seconds. As discussed more below, hydration treatment time may be tied in effective ratios to the treatment time in the second treatment step 150 in order to achieve the high level of stabilization in only a short amount of time.

In some cases, it has been determined that a selected balance of steam treatment and microwave treatment provides the desired amount of deactivation of lipase enzyme activity while also providing a desired amount of hydration in the final treated bran fraction. As described herein, the bran fraction should generally be steam treated for no more than 180 seconds. While additional steam treatment time may provide additional deactivation of enzymes, the hydration level of the bran fraction will also tend to increase. Such an increase in hydration in the steam treatment step will then result in more microwave energy being required to dry the bran fraction to the final desired moisture content and result in undesirable added energy costs and time to the process. Additionally, longer steam treatment will generally result in increased incidence of agglomeration in the bran fraction. Increased agglomeration can also affect the energy expenditure required in the microwave treatment step in order to achieve the desired deactivation and drying. However, the selected levels of hydration in the bran fraction described herein provide increased deactivation during the microwave treatment step in a short amount of time. Therefore, a balance of hydration required to deactivate lipase activity and provide increased hydration to benefit the microwave treatment step is matched with the times and energy expenditure required to dry and deactivate the bran fraction during microwaving.

In order to achieve high levels of deactivation with the multi-stage treatments, the first treatment step 140 is configured effective to provide a partial deactivation of the lipase enzyme in the hydrated bran fraction of about 20 to about 50 percent, in other cases about 25 to about 48 percent, in the hydrated bran fraction relative to the starting bran fraction.

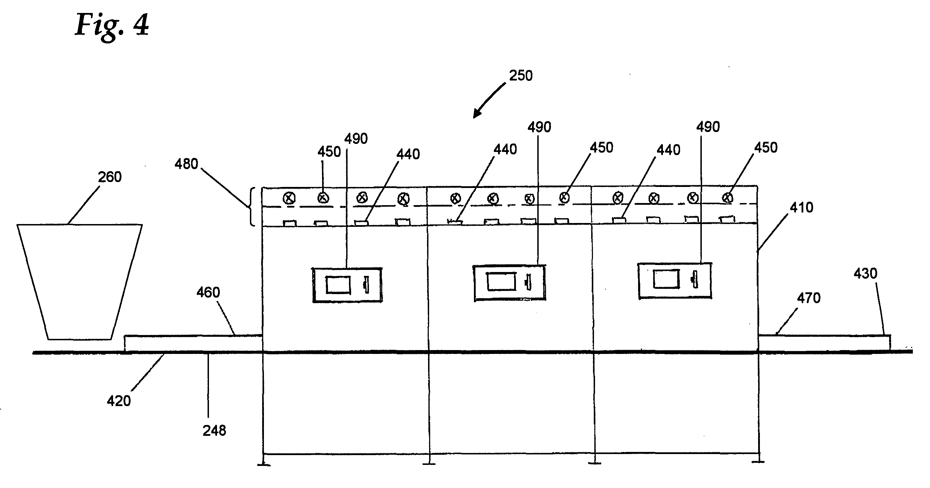

After the first treatment step, the hydrated bran fraction proceeds to the second treatment step 150, which in one approach is a microwave stabilizer 250 as shown in FIG. 2. The microwave stabilizer 250 is effective to deactivate a second portion of the lipase enzyme activity in the hydrated bran fraction 222 from the hydration chamber 240. As shown in FIG. 4, the microwave chamber 250 may be an enclosed structure 410 with an entrance 420 and exit 430 provided for the bran fraction entering the chamber to be treated and exit the chamber after microwave treatment, respectively. Alternatively, the microwave chamber 250 may simply be a location along the process line where the second treatment step occurs. The microwave stabilizer 250 may also be utilized to dry the moisture content of the hydrated bran fraction to a desired moisture content.

The microwave chamber 250 is configured to provide microwave energy to the hydrate bran fraction in the second treatment step at 5 to 100 kW, and in some cases, about 5 to about 10 kW. The microwave energy has a frequency of 915 MHz to 20 GHz, and in some cases about 2450 MHz.

The microwave chamber 250 is generally provided with one or more magnetrons 440 effective to provide the chamber with uniform microwave energy. The layout of the magnetrons is determined based on the shape and size of the microwave chamber and wavelength selected. Generally, the one or more magnetrons may be effective to provide microwave energy at 2450 MHz having a 12.2 cm wavelength. In some cases, the leakage of microwave energy from the chamber may be reduced and/ or prevented by the incorporation of water piping and/ or the incorporation of a stainless steel gating devices 460, 470 at the entrance and exit of the microwave chamber 250. The microwave chamber may also be provided with cooling fans 450 to prevent overheating of the magnetron during normal operation. For example, the cooling fan is generally turned on prior to the energizing of the magnetron. The one or more magnetrons 440 and the one or more cooling fans 450 may be provided in a microwave initiator case 480. The microwave chamber may additionally be provided with one or more windows 490 for viewing the treatment process.

The microwave treatment of the hydrated bran fraction is also effective to provide drying of the hydrated bran fraction. For example, the treated bran fraction from the microwave treatment may be provided with a moisture content after the second treatment step of about 5 to about 13 percent, in some cases about 6 to about 12 percent, and in other cases, about 8 percent.

In one embodiment the treatment time for the hydrated bran fraction in the second or microwave treatment step is 60 to 180 seconds, and in other cases about 180 seconds. Similar to the above discussion regarding controlling of the time of the hydration step, it is also important to control the amount of time the bran fraction is treated during the microwave treatment step. By controlling the amount of time the hydrated bran fraction is exposed to the microwave treatment, the moisture content and ultimate deactivation of the lipase enzyme activity can be controlled. However, longer periods of microwave treatment can result in the bran fraction becoming burned or having an undesirable burned flavor.

Following the microwave stabilization of the bran fraction, the treated bran fraction has a lipase enzyme activity reduced by about 50 to about 100 percent relative to the lipase enzyme activity in the starting bran fraction. In some cases, the lipase enzyme activity is reduced by about 90 to about 100 percent, in other cases, the lipase enzyme activity is reduced by about 95 to 100 percent, and in yet other cases, the lipase enzyme activity is completely deactivated in the treated bran fraction. This high level of deactivation is achieved in about 600 or less seconds and in some cases in about 360 seconds or less.

Following the two-stage deactivation of the bran fraction, the treated bran fraction is recombined 271 with the flour fraction 224 to provide whole grain flour having a reduced lipase enzyme activity 280. This treated whole grain flour 280 has an increase shelf-life relative to untreated whole grain flour. In certain embodiments, the shelf-life of the treated whole grain flour is at least about 4 weeks, in some cases at least about 8 weeks, and in other cases at least about 9 months.

In some cases, a ratio of the treatment time in the second treatment step (microwave) to a treatment time in the first treatment step (steam hydration) is carefully controlled to achieve the high level of deactivation in only a very short amount of time. For example, in one approach the ratio of treatment time in the second step to the treatment time in the first step is 1:0.3 to 1:3. By one approach, this ratio of treatment times is effective to reduce the enzyme activity in the treated bran fraction relative to the starting bran fraction by about 85 to about 100 percent when the combined treatment times of the first and second treatments is less than about 360 seconds. For example, in another approach, the ratio of treatment time in the second step to the treatment time in the first step is about 1:1 to about 1:2.2, the ratio effective to reduce the enzyme activity in the treated bran fraction relative to the starting bran by about 90 to about 100 percent when the combined treatment times of the first and second treatments is about 240 to about 360 seconds.

Not wishing to be limited by theory, it is believed that the first and second treatment steps, when properly configured, work synergistically to provide a rapid and thorough deactivation of lipase activity in the bran fraction. As described above, by increasing the moisture content of the bran fraction, the microwave energy passing through the bran fraction in the second treatment step more efficiently heats the bran fraction particles leading to an increased and more efficient deactivation of the lipase enzymes. Therefore, it is desirable to provide a measured amount of hydration to the bran fraction before subjecting the bran to microwave energy. While any starch that may be present in the bran fraction can gelatinize under the steam and/ or microwave treatment steps, which can result in the increased incidence of agglomeration, starch gelatinization is mmimized and, in some cases, avoided by selecting the conditions and processing times described herein. Additionally, too much moisture added in the hydration step can result in increased energy expenditure to achieve sufficient drying during the microwave step.

By using steam in the first treatment step, a measured amount of hydration can be provided to the bran fraction by controlling the steam conditions and time of exposure. The steam therefore, has the dual benefit of increasing the moisture content of the bran fraction to improve the quality of the microwave treatment, as well as providing a partial amount of lipase enzyme deactivation. In addition, to further deactivation of the lipase enzymes in the second treatment step, the microwave energy also serves to drive off the additional moisture. Similar to the first treatment step, the second treatment step can be controlled by manipulating the microwave energy and time variables to achieve a desired deactivation as well as a desired moisture content of the treated bran fraction.

The first and second treatment steps may be provided to the bran fraction such that the first deactivation step is configured to deactivate the lipase enzymes from an outer portion of the bran particle inwardly and the second deactivation step is configured to deactivate the lipase enzymes from an inner portion of the bran particle outwardly. For example, the steam hydration is configured to initially deactivate enzymes through a cross-section of bran from an outer portion of the bran particles inwardly toward the center. The microwave energy then completes the deactivation by deactivating the enzymes through the cross-section from the inner portions of the bran particle outwardly the surface. Such unique combinations of cross-section, inwardly and outwardly deactivation synergistically combines to achieve the high levels of deactivation in a short amount of time. This configuration is able to achieve 77 to 100 percent deactivation of the lipase enzyme in the treated bran fraction relative to the starting bran fraction in 600 seconds or less.

As mentioned above, conveyors 246, 248 may be provided that direct the bran fraction through the various stages and also connects the hydration chamber 240 to the microwave chamber 250. The conveyor 246, 248 are effective to move the hydrated bran fraction at least from the hydration chamber 240 to the microwave chamber 250 in the process line. As shown in FIG. 2, the conveyor may be one or more conveyor belts 246, 248 that connect the hydration chamber 240 and the microwave chamber 250. As depicted, the feeder 238 may positioned over a lead end of conveyor belt 246 which then moves the bran fraction deposited on the belt 246 through the hydrator 240. The speed of the conveyor belt may be adjusted to provide the desired residence time of the bran fraction in the hydrator 240. Similarly, conveyor belt 248 may be provided such that the belt moves the hydrated bran fraction deposited on the belt 248 through the microwave chamber 250. Similarly, the speed of the conveyor belt 248 may be adjusted to provide the desired residence time of the bran fraction in the microwave chamber 250. The described arrangement may be used in a continuous fashion where the bran fraction and/ or hydrated bran fraction are processed in a manner where the bran fraction and/ or hydrated bran fraction are consistently moving during the first and second treatment steps. Alternatively, the belts 246, 248 may be stopped during treatment and then progressed forward upon completion of the individual treatment of these fractions.

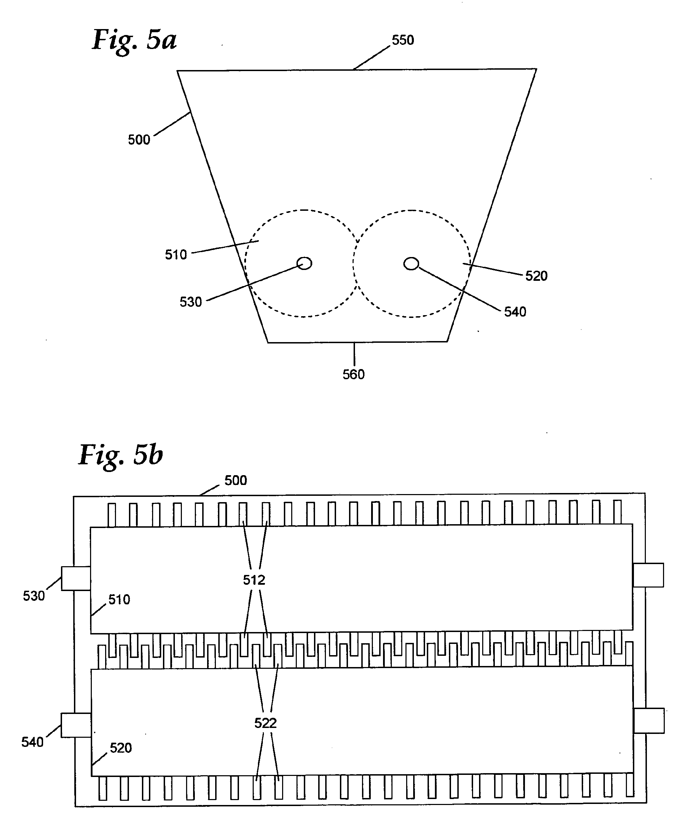

In certain embodiments, the bran fraction is provided at a bed depth of 0.5 to 3 cm during the first treatment step. Additionally, the hydrated bran fraction, in certain embodiments, is provided at a bed depth of 0.5 to 3 cm during the second treatment step. Further, it has been observed that during the first treatment step the bran fraction may form agglomerates due to the increased moisture provided to the bran fraction. Particularly, a desired particle size of the hydrated bran fraction after hydration but before microwaving is 200 $\mu$m to 1000 $\mu$m. That is, it is desired, in some cases, to microwave the bran fraction having a particle size of 200 $\mu$m to 1000 $\mu$m at a bed depth of 0.5 cm to 3 cm to achieve the high level of deactivation. Therefore, in additional embodiments, the hydrated bran fraction may be processed 260 to reduce the particle size of the any agglomerates that may have formed during the first treatment prior to the second treatment. This processing is shown in more detail in FIGS. 5a and 5b.

As described above, agglomerates of the bran fraction may form during the first treatment step. In some cases, to achieve high levels of enzyme deactivation in the second treatment step, any agglomerates that may form in the hydrated bran fraction may be broken up prior to the second treatment step. To achieve this, a breaking device 260 may be provided between the first and second treatment steps to accomplish this purpose. An exemplary embodiment is depicted in FIGS. 5a and 5b and is not drawn to scale.

The breaking device 500 may include a hopper with an open upper end 550 and an open lower end 560. In profile, the upper end 550 is wider than the lower end 560 and the body of the device 500 has a gradually narrowing profile from top to bottom. In the breaking device 500, are first and second rollers 510, 520 which are provided with interleaving portions or teeth 512 and 522, respectively. The first roller 510 is rotatable around a first axis 530 and the second roller 520 is rotatable around a second axis 540. The rollers may be rotated and driven toward one another (or in opposite directions) by one or more motors (not shown) connected to the rollers or axes. The rollers 510, 520 are positions such that the hydrated bran fraction entering the top 550 of the breaking device 500 must pass between the rollers 510, 520 before passing through the lower end 560 of the breaking device. The positioning and rotation of the rollers is controlled to break apart any agglomerates that may form during the first treatment step and provide the hydrated bran fraction at a particle size that approximates the size of the bran fraction particles prior to hydration. It should be noted that some swelling of the bran fraction particles may occur during hydration and as such should be accounted for when positioning the rollers.

The conveyor belts 246, 248 may optionally be provided with a vibrating device or other manipulation device to move or agitate the bran fraction on the belt as it moves through the various stages in order to maintain a consistent bed depth during processing.

Turning back to FIG. 2, following the second treatment step, the process 100 may be provided with a cooling device 270 effective to cool the treated bran fraction. For example, the cooling device 270 may be provided in-line and with the microwave stabilizer 250 such that after exposing the hydrated bran fraction to microwave energy, the treated bran fraction is then rapidly cooled to room temperature. In another embodiment, the cooling may occur during an extended holding period on the conveyor. For example, a length of conveyor belt may be provided to allow the treated bran fraction to reside on the belt 248 for an amount of time for the treated bran fraction to achieve a cooled temperature. In certain embodiments, the residence time on the belt sufficient to cool the treated bran fraction may be about 5 minutes. By one approach, the treated bran fraction is at a temperature of about 50 to about 70 °C following the microwave treatment step and may be cooled to about 20 to about 25 °C or about ambient temperature during the cooling step. Additionally, the time of cooling may be such that the amount of moisture driven out of the treated bran faction is controlled and stopped when the desired moisture content and lipase enzyme deactivation has been achieved.

As earlier described, the treated bran fraction and the flour fraction may be recombined to provide a whole grain flour 280. To accomplish this the system may include scaling device 278 for weighing the flour fraction containing the endosperm 224 and/or a scaling device 274 for weighing the treated bran fraction so that the flour fraction and bran fraction are recombined in the desired ratios. The use of such scaling devices may be used to control the relative amounts of the flour fraction and the treated bran fraction that recombined in the whole grain flour 280. In some embodiments, the amounts of the flour fraction and treated bran fraction approximate the amounts in a standard whole grain flour that has not undergone the described process. For example, the composition of the treated whole grain flour is about 68 to about 85 weight percent flour fraction and about 15 to about 32 weight percent treated bran fraction.

Advantages and embodiments of the process described herein are further illustrated by the following Examples. However, the particular conditions, processing schemes, materials, and amounts thereof recited in these Examples, as well as other conditions and details, should not be construed to unduly limit this method. All percentages are by weight unless otherwise indicated.

EXAMPLES

Comparative Example 1

For a comparative experiment, a bran fraction as described above was provided from a milled USA red soft wheat by milling the whole red soft wheat followed by screening to separate out the bran fraction containing the bran and germ. The initial lipase activity of the bran fraction was determined to be about 1263 U/g and the bran fraction had about 12.2 percent moisture. In this experiment, no additional steam hydration was completed. Thus, no additional moisture was added to the bran fraction prior to exposing the bran fraction to microwave energy.

The bran fraction was subjected to various intensities of microwave energy over a period of about 3 minutes shown in Table 1 below. Lipase activity after the microwave treatment was determined. Results are also in Table 1. One test method for determining lipase activity is described in U.S. Publication No. 2009/0238935, described below.

Lipase activity was measured of each sample by placing about 0.1g the bran fraction in about 20mL of a chilled assay buffer (0.2 M Tris(hydroxymemyl)aminomethane hydrochloride, pH 7.4), vortexing the sample to dissolve, and rocking the mixture in an ice bath for 30 minutes. The mixture was then centrifuged at about 3128g at a temperature of about 5°C for about 10 minutes. The supernatant is removed and used for analysis. A substrate solution is formed by first mixing about 0.0725 g of 4-methylumbelliferyl heptanoate in about 15 mL of 2-methoxyethanol to form a stock solution. Then about 1.5 mL of the stock solution is diluted in about 23.5mL of deionized water to form the substrate solution. About 50 $\mu$L of the supernatant is placed into a cuvette with about 2950 $\mu$L of assay buffer and about 10 $\mu$L of the substrate solution. The sample is then measured using fluorescence excitation-emission analysis in a fluorescence spectrometer (Em: 440nm; Ex: 330nm; cut-off: 390nm; slit width: 5nm for both Em and Ex; duration: 5 min; data interval: 0.001 min). The results are compared to a standard curve to determine the lipase activity in mU/mL. The following formula is used to convert mU/mL to U/g:

$$[\text{Lipase activity}]_{\text{Sample}} \, U/g = 1.204 \times ([\text{Activity}]_{\text{Sample}} \, mU/mL \, / \, W_{\text{Sample}} \, (g))$$

The bran fractions provided in samples 1 and 2 were then combined with a flour fraction in amounts relative to the natural composition of whole grain. After 50 days of storage at an ambient temperature 25 °C, the samples had not spoiled or turned rancid. Rancidity was determined by analyzing the amount of free fatty acids (FFA) in the sample. A sample having a result of greater than 2500ppm of FFA is considered to be rancid. Samples 1 and 2 had less than 2500 ppm of FFA after 50 days of storage.

Free fatty acid content of the flours was adapted from the method set forth in "Jong, C.; Badings, H. T.; Journal of High Resolution Chromatography; 1990; Determination of Free Fatty Acids in Milk and Cheese Procedures for Extraction, Clean up, and Capillary Gas Chromatography Analysis." Lipid extracts, containing free fatty acids, are obtained from foods by extraction with acidified organic solvents. The anhydrous lipid extracts are passed through a weak anion exchange SPE cartridge to isolate the free fatty acids from the coextracted material, particularly neutral glycerides. The test method for determining FFA content is described in U.S. Publication No. 2009/0238935, which is incorporated herein by reference.

FFA was determined by first performing a sample extraction. The following components are combined in to a 45 mL glass test tube in the following order 1) about 1.0 g of sample; 2) about 1.0 mL of working internal standard solution (e.g., containing 99 percent purity undecanoic acid); 3) about 1.0 mL ethanol; and 4) about 0.3 mL 2.5 M $H_2SO_4$. The mixture was vortexed, about 4.5 g of diatomaceous earth was added, and the combination was allowed to equilibrate for about 10 minutes. After equilibration, the combination is filtered through #1 Whatman paper and the filtrate is collected in screw cap tube.

The free fatty acids are then isolated by first loading about 3 mL of the sample extract into a solid phase extraction (SPE) cartridge and the sample is allowed to drain totally. The optimum amount of solution needed to elute all of the FFAs can be determined through a screening process. In this case, the sample is washed twice with about 2 mL methylene chloride : 2-propanol solution to remove neutral glycerides and allowed to drain totally. About 2.5 mL of 2 percent acetic acid in methyl- tert - butylether (MTBE) solution is added and the eluate is discarded. The SPE cartridge is transferred to sample collection vials followed by a second addition of, for example, about 2.5 mL of 2 percent acetic acid - MTBE solution. The eluate containing the FFAs is collected into a 4 mL vial and mixed.

The sample is then analyzed on a gas chromatograph capable of on-column injection using hydrogen as the carrier gas at a flow of 10.0 mL/min with an injection volume of 1 µL; a temperature program of about 60 °C hold about 0.5min; about 50°C/ min to about 100 °C; about 10°C/min to about 250 °C, hold about 1 min; and a flame ionization detector @ 260 °C, range 0.

The samples are analyzed on five point calibration curve ranges for 5 to 200 ppm. The five response factors are averaged, then the average response factor is used to calculate unknown FFA, each compound having its own response factor. The response factor calculation is determined using the following formulas:

$$\text{Response Factor (RF): } RF_x = (A_x C_{is})/(A_{is} C_x)$$

Average Response Factor ($RF_{avg}$):

$$RF_{Xavg} = (RF_{X1} + RF_{X2} + RF_{X3} + RF_{X4} + RF_{X5})/5$$

Where: $RF_x$ = Response factor of compound X; Ax = Peak area of compound X; $C_{is}$ = Total (µg) of internal standard added; $A_{is}$ = Peak area of internal standard; Cx = Total (µg) of compound X; and $RF_{Xavg}$ = average response factor for compound X derived from a five point calibration.

Finally the FFA concentration is calculated using the formula: Sample

$$\text{Concentration (ppm)} = (A_x \times C_{is})/(A_{is} \times FRX_{avg} \times \text{Weight of sample (g)})$$

Table 1

| Sample | Microwave energy (kW) | Microwave Time, seconds | Lipase Activity (U/g) | Reduction in Lipase Activity (%) |
|--------|----------------------|------------------------|----------------------|----------------------------------|
| Control | - | | 1263 | - |
| 1 | 10 | 180 | 881 | 30.2 |
| 2 | 30 | 180 | 423 | 66.5 |

Comparative Example 2

For another comparative experiment, a bran fraction was obtained in a manner similar to Example 1. The initial lipase activity of the bran fraction was determined to be about 2766.2 U/g and the bran fraction had about 12.2 percent moisture. In this experiment, only steam treatment was used to treat the bran. Thus, the bran fraction was not exposed to microwave energy.

The bran fraction was exposed to steam for various amounts of time ranging from 60 seconds to 180 seconds as set forth in Table 2. The steam was at a temperature of about 115°C and a pressure of about 171.0 kPA (24.8 psi). Lipase activity of each sample was determined as in comparative example 1 and the results are listed in Table 2.

Table 2

| Sample | Initial Moisture (%) | Steam Time, (Sec) | Moisture After Steam Treatment (%) | Lipase Activity (U/g) | Reduction in Lipase Activity (%) |
|---|---|---|---|---|---|
| Control | 12.2 | - | - | 2766.2 | - |
| 1 | 12.2 | 60 | 15.4 | 2086.8 | 24.6 |
| 2 | 12.2 | 120 | 16.6 | 1716.0 | 38.0 |
| 3 | 12.2 | 180 | 17.3 | 1426.3 | 48.4 |

Example 3

Bran fractions from two different lots were obtained in a manner similar to that of Example 1. The bran fractions used for these tests was determined to have an initial lipase enzyme activities of about 1117 and about 2766.2 U/ g and the moisture content of the bran fraction prior to treatment was determined to be about 12 percent and about 12.2 percent. The samples were then treated as described in the manner described in Tables 3a and 3b. The data in Table 3a was from red soft wheat from the United States of America and the data in Table 3b was from red soft wheat from China. The hydration step used steam having a temperature of about 115°C and a pressure of about 171.0 kPa (24.8 psi). The microwave energy used was about 10kW and had a frequency of about 2450 MHz. The moisture of the bran fraction following the hydration step was about 15-18 percent as set forth in the tables.

Table 3a

| Trial No. | Process Conditions | | | | Result Analysis | | |
|---|---|---|---|---|---|---|---|
| | Moisture Before Process (%) | Hydration Time (sec) | Moisture After Hydration (%) | Microwave Time @ 10kW (sec) | Moisture After Microwave (%) | Lipase Activity (U/g) | Lipase Deactivation |
| Control | 12 | - | 12 | - | - | 1117 | - |
| 1 | 12 | - | 12 | 60 | 7.0 | 949 | 15.0 |
| 2 | 12 | - | 12 | 180 | 3.6 | 290 | 74.0 |
| 3 | 12 | 65 | ~15.5 | 60 | 8.1 | 252 | 77.4 |
| 4 | 12 | 65 | ~15.5 | 180 | 4.5 | 207 | 81.5 |
| 5 | 12 | 130 | ~17 | 60 | 12.4 | 94 | 91.6 |
| 6 | 12 | 130 | ~17 | 180 | 7.0 | 0 | 100.0 |

Table 3b

| Trial No. | Process Conditions | | | | Result Analysis | | |
|---|---|---|---|---|---|---|---|
| | Moisture Before Process (%) | Hydration Time (sec) | Moisture After Hydration (%) | Microwave Time @ 10kW (sec) | Moisture After Microwave (%) | Lipase Activity (U/g) | Lipase Deactivation |
| Control | 12.2 | - | - | - | - | 2766.2 | - |

(continued)

| Trial No. | Process Conditions | | | | Result Analysis | | |
|---|---|---|---|---|---|---|---|
| | Moisture Before Process (%) | Hydration Time (sec) | Moisture After Hydration (%) | Microwave Time @ 10kW (sec) | Moisture After Microwave (%) | Lipase Activity (U/g) | Lipase Deactivation |
| 7 | 12.2 | 60 | 15.4 | 60 | 11.0 | 1131 | 59.1 |
| 8 | 12.2 | 60 | 15.4 | 120 | 8.7 | 734.8 | 73.4 |
| 9 | 12.2 | 60 | 15.4 | 180 | 5.2 | 336.9 | 87.8 |
| 10 | 12.2 | 120 | 16.6 | 60 | 12.3 | 360.2 | 87 |
| 11 | 12.2 | 120 | 16.6 | 120 | 8.2 | 196 | 92.9 |
| 12 | 12.2 | 120 | 16.6 | 180 | 6.2 | 169.1 | 93.9 |
| 13 | 12.2 | 180 | 17.3 | 60 | 11.8 | 360.2 | 87 |
| 14 | 12.2 | 180 | 17.3 | 120 | 8.6 | 138.8 | 95 |
| 15 | 12.2 | 180 | 17.3 | 180 | 6.2 | 63.1 | 97.7 |

As can be seen from Table 3a, trials 5 and 6 provided the greatest amount of deactivation with trial 6 providing about 100 percent deactivation and a desirable amount of moisture. The ratio of microwave to hydration times in trial 5 was about 1:2.2 and the ratio of microwave to hydration times in trial 6 was about 1:0.7. In Table 3b, trials 14 and 15 provided the greatest amount of deactivation. Moreover, the combination of process parameters in trial 15 provided about 97.7 percent deactivation while at the same time providing the bran fraction with a preferred amount of moisture with regard to generating a whole grain flour for extended storage. The ratio of microwave to hydration times in trial 14 was 1:1.5 and the ratio of microwave to hydration times in trial 15 was 1:1. Sample 15 was used to make flour as described above and which was then used to make a whole grain biscuit. It is believed that the biscuit will have a shelf life of greater than about 9 months.

Comparative Example 4

As a comparison, whole wheat berries (unmilled USA red soft wheat) were treated in a manner similar to the samples in Example 3 and for times similar to those used in the experiments listed in Table 3b. The results are listed in Table 4.

Table 4

| Trial No. | Hydration Step | | | | | Result Analysis | | | |
|---|---|---|---|---|---|---|---|---|---|
| | Moisture Before Process (%) | Hydration Time (sec) | Moisture After Hydration (%) | Lipase Activity After Hydration (U/g) | Lipase Deactivation After Hydration (%) | Microwave Time @10kW (sec) | Moisture After Microwave (%) | Lipase Activity After Microwave (U/g) | Total Lipase Deactivation |
| Control | 11.5 | - | - | 690.8 | | - | - | 690.8 | - |
| 7 | 11.5 | 60 | 13.5 | 610.1 | 11.7 | 60 | 13.3 | 496.6 | 28.1 |
| 8 | 11.5 | 60 | 13.5 | 610.1 | 11.7 | 120 | 12.6 | 473.8 | 31.4 |
| 9 | 11.5 | 60 | 13.5 | 610.1 | 11.7 | 180 | 11.9 | 370.1 | 46.4 |
| 13 | 11.5 | 180 | 15.4 | 513.9 | 25.6 | 60 | 13.5 | 345.9 | 49.9 |
| 14 | 11.5 | 180 | 15.4 | 513.9 | 25.6 | 120 | 11.3 | 246.7 | 64.3 |
| 15 | 11.5 | 180 | 15.4 | 513.9 | 25.6 | 180 | 10.2 | 171.7 | 75.1 |

**Claims**

1. A method of providing a whole-grain flour having reduced lipase enzyme activity using a multi-stage deactivation process in a grain processing system, the system comprising:

   a hydration chamber arranged and configured to provide steam hydration;
   a microwave chamber after the hydration chamber;
   a breaking device positioned between the hydration chamber and the microwave chamber;
   a conveyor connecting the hydration chamber to the microwave chamber;
   the method comprising:

   separating a flour fraction having endosperm from a milled bran fraction having bran and germ, the milled bran fraction having a lipase enzyme activity;
   subjecting the milled bran fraction to a steam treatment step, whereby the bran fraction is exposed to steam having a temperature of 100 to 150°C and a pressure of 16.54kPa to 337.8kPa (2.4 to 49 psi) for 60 to 180 seconds, in the hydration chamber effective to hydrate the milled bran fraction and to deactivate a first portion of the lipase enzyme activity to provide a hydrated bran fraction;
   conveying the hydrated bran fraction to the breaking device to break apart any agglomerates of the hydrated bran fraction that form in the hydration chamber;
   subjecting the hydrated bran fraction to a drying treatment step using microwave energy at 5 kW to 100 kW at 915 MHz to 20 GHz for 60 to 180 seconds in the microwave chamber effective to dry the hydrated bran fraction and to deactivate a second portion of the lipase enzyme activity to provide a treated bran fraction, whereby the lipase enzyme activity in the treated bran fraction is reduced relative to the milled bran fraction by 77 to 100 percent; and
   combining the treated bran fraction with the separated flour fraction to provide a whole-grain flour having reduced lipase enzyme activity; and

   wherein a total time of the combined steam and drying treatment steps is less than 600 seconds.

2. The method of claim 1, wherein the breaking device comprises a hopper having a wide opening at the hopper upper end for receiving the hydrated bran fraction into the hopper, a narrow opening at the hopper lower end for the hydrated bran fraction leaving the hopper, the profile of the hopper narrowing from top to bottom, and two rollers positioned within the hopper and in close proximity to each other such that the hydrated bran fraction passing through the hopper must pass between the rollers.

3. The method of claim 1 or claim 2, wherein a ratio of a treatment time in the microwave chamber to a treatment time in the hydration chamber is 1:0.3 to 3:1.

4. The method of any one of claims 1 to 3, wherein the conveyor comprises one or more conveyor belts connecting the hydration chamber to the microwave chamber.

5. The method of any one of claims 1-4, wherein the first treatment step is a steam hydration to increase a moisture content of the hydrated bran fraction by 25 to 42 percent relative to the moisture content of the milled bran fraction.

6. The method of any one of claims 1-5, wherein a moisture content of the hydrated bran fraction after the first treatment step is 13 to 20 percent.

7. The method of any one of claims 1-6, wherein the hydrated bran fraction consists of particles having a size of 200 to 1000 $\mu$m.

8. The method of any one of claims 1-7, wherein the second treatment step dries the moisture content of the treated bran fraction to 5 to 13 weight percent.

9. The method of any one of claims 1-8, further comprising processing the hydrated bran fraction to reduce a particle size of any agglomerates formed during the first treatment to 200 to 1000 $\mu$m.

10. The method of any one of claims 1-9, wherein the milled bran fraction and the hydrated bran fraction are treated at a bed depth of 0.5 to 3 cm during the first and second treatment steps.

**11.** The method of any one of claims 1-10, wherein the whole grain is selected from the group consisting of wheat, oat, barley, maize, rice, rye, spelt, millet, quinoa, triticale, amaranth, teff, corn, buckwheat, bulgar, sorghum and mixtures thereof.

**Patentansprüche**

**1.** Verfahren zur Bereitstellung eines Vollkornmehls mit einer verringerten Lipaseenzymaktivität unter Verwendung eines mehrschrittigen Deaktivierungsprozesses in einem Kornverarbeitungssystem, wobei das System Folgendes umfasst:

eine Hydrationskammer, die zur Bereitstellung einer Dampfhydration angeordnet und eingerichtet ist;
eine Mikrowellenkammer nach der Hydrationskammer;
eine Brechvorrichtung, die zwischen der Hydrationskammer und der Mikrowellenkammer positioniert ist;
ein Fördermittel, das die Hydrationskammer mit der Mikrowellenkammer verbindet;
wobei das Verfahren Folgendes umfasst:

Trennen eines Mehlteils, das Endosperm aufweist, von einem gemahlenen Kleieteil mit Kleie und Keim, wobei der gemahlene Kleieteil eine Lipaseenzymaktivität aufweist;
Unterziehen des gemahlenen Kleieteils einer Dampfbehandlung, wobei der Kleieteil Dampf mit einer Temperatur von 100 bis 150 °C und einem Druck von 16,54 kPa bis 337,8 kPa (2,4 bis 49 psi) 60 bis 180 Sekunden lang ausgesetzt wird, in der Hydrationskammer wirksam, um den gemahlenen Kleieteil zu hydrieren und einen ersten Teil der Lipaseenzymaktivität zu deaktivieren, um einen hydrierten Kleieteil zur Verfügung zu stellen;
Beförderung des hydrierten Kleieteils zur Brechvorrichtung, um etwaige Agglomerate des hydrierten Kleieteils, die sich in der Hydrationskammer bilden, auseinanderzubrechen;
Unterziehen des hydrierten Kleieteils einem Trocknungsbehandlungsschritt unter Verwendung von Mikrowellenenergie bei 5 kW bis 100 kW bei 915 MHz bis 20 GHz für 60 bis 180 Sekunden in der Mikrowellenkammer, was wirksam ist, um den hydrierten Kleieteil zu trocknen und einen zweiten Teil der Lipaseenzymaktivität zu deaktivieren, um einen behandelten Kleieteil bereit zu stellen, wobei die Lipaseenzymaktiviät in dem behandelten Kleieteil im Verhältnis zu dem gemahlenen Kleieteil um 77 bis 100 Prozent verringert ist; und
Kombinieren des behandelten Kleieteils mit dem getrennten Mehlteil, um ein Vollkornmehl bereit zu stellen, das eine verringerte Lipaseenzymaktivität aufweist; und

wobei die Gesamtzeit der kombinierten Dampf- und Trockungsbehandlungsschritte weniger als 600 Sekunden beträgt.

**2.** Verfahren nach Anspruch 1, wobei die Brechvorrichtung einen Trichter umfasst, der eine große Öffnung am oberen Ende des Trichters zur Aufnahme des hydrierten Kleieteils in den Trichter umfasst, eine schmale Öffnung am unteren Ende des Trichters, an dem der hydrierte Kleieteil den Trichter verlässt, wobei sich das Profil des Trichters von oben nach unten verengt, und wobei zwei Walzen innerhalb des Trichters und nahe beieinander positioniert sind, derart, dass der hydrierte Kleieteil, der durch den Trichter passiert, zwischen den Walzen passieren muss.

**3.** Verfahren nach Anspruch 1 oder Anspruch 2, wobei ein Verhältnis einer Behandlungszeit in der Mikrowellenkammer zu einer Behandlungszeit in der Hydrationskammer 1:0,3 bis 3:1 beträgt.

**4.** Verfahren nach einem der Ansprüche 1 bis 3, wobei das Fördermittel einen oder mehrere Förderbänder umfasst, welche die Hydrationskammer mit der Mikrowellenkammer verbinden.

**5.** Verfahren nach einem der Ansprüche 1 bis 4, wobei der erste Behandlungsschritt eine Dampfhydration ist, um einen Feuchtigkeitsgehalt des hydrierten Kleieteils um 25 bis 42 Prozent im Verhältnis zum Feuchtigkeitsgehalt des gemahlenen Kleieteils zu erhöhen.

**6.** Verfahren nach einem der Ansprüche 1 bis 5, wobei ein Feuchtigkeitsgehalt des hydrierten Kleieteils nach dem ersten Behandlungsschritt 13 bis 20 Prozent beträgt.

**7.** Verfahren nach einem der Ansprüche 1 bis 6, wobei der hydrierte Kleieteil aus Teilchen mit einer Größe von 200

**EP 2 693 897 B1**

bis1000 μm besteht.

8. Verfahren nach einem der Schritte 1 bis 7, wobei der zweite Behandlungsschritt den Feuchtigkeitsgehalt des behandelten Kleieteils auf 5 bis 13 Gew.-% trocknet.

9. Verfahren nach einem der Ansprüche 1 bis 8, ferner umfassend die Verarbeitung des hydrierten Kleieteils zur Verringerung einer Teilchengröße von etwaigen Agglomeraten, die während der ersten Behandlung gebildet wurden, auf 200 bis 1000 μm.

10. Verfahren nach einem der Ansprüche 1 bis 9, wobei der gemahlene Kleieteil und der hydrierte Kleieteil bei einer Betttiefe von 0,5 bis 3 cm während den ersten und zweiten Behandlungsschritten behandelt werden.

11. Verfahren nach einem der Ansprüche 1 bis 10, wobei das Vollkorn ausgewählt ist aus der Gruppe bestehend aus Weizen, Hafer, Gerste, Mais, Reis, Roggen, Dinkel, Hirse, Quinoa, Triticale, Amaranth, Zwerghirse, Getreide, Buchweizen, Bulgur, Sorghum und Mischungen davon.

## Revendications

1. Procédé de fourniture d'une farine de céréales complètes possédant une activité enzymatique de lipase réduite en utilisant un processus de désactivation multi-étage dans un système de traitement de céréales, le système comprenant :

une chambre d'hydratation disposée et conçue pour fournir une hydratation à la vapeur ;
une chambre à micro-ondes après la chambre d'hydratation ;
un dispositif de désagrégation positionnée entre la chambre d'hydratation et la chambre à micro-ondes ;
un convoyeur reliant la chambre d'hydratation à la chambre à micro-ondes ;
le procédé comprenant :

la séparation d'une fraction de farine possédant l'endosperme d'une fraction de son broyée possédant le son et le germe, la fraction de son broyée possédant une activité enzymatique de lipase ;
la soumission de la fraction de son broyée à une étape de traitement à la vapeur, moyennant quoi la fraction de son est exposée à de la vapeur ayant une température de 100 à 150 °C et une pression de 16,54 kPa à 337,8 kPa (2,4 à 49 psi) pendant 60 à 180 secondes, dans la chambre d'hydratation, efficace pour hydrater la fraction de son broyée et pour désactiver une première partie de l'activité enzymatique de lipase pour fournir une fraction de son hydratée ;
le transport de la fraction de son hydratée vers le dispositif de désagrégation pour séparer les agglomérats éventuels de la fraction de son hydratée qui se forment dans la chambre d'hydratation ;
la soumission de la fraction de son hydratée à une étape de traitement de séchage à l'aide d'une énergie de micro-ondes comprise entre 5 kW et 100 kW entre 915 MHz et 20 GHz pendant 60 à 180 secondes dans la chambre à micro-ondes, efficace pour sécher la fraction de son hydratée et pour désactiver une deuxième partie de l'activité enzymatique de lipase pour fournir une fraction de son traitée, moyennant quoi l'activité enzymatique de lipase dans la fraction de son traitée est réduite de 77 à 100 pour cent par rapport à la fraction de son broyée ; et
la combinaison de la fraction de son traitée avec la fraction de farine séparée pour fournir une farine de céréales complètes possédant une activité enzymatique de lipase réduite ; et

dans lequel un temps total des étapes combinées de traitement à la vapeur et de séchage est inférieur à 600 secondes.

2. Procédé selon la revendication 1, dans lequel le dispositif de désagrégation comprend une trémie comportant une large ouverture au niveau de l'extrémité supérieure de la trémie, pour recevoir la fraction de son hydratée dans la trémie, une ouverture étroite au niveau de l'extrémité inférieure de la trémie permettant à la fraction de son hydratée de quitter la trémie, le profil de la trémie se rétrécissant de haut en bas, et deux rouleaux positionnés à l'intérieur de la trémie et à proximité immédiate l'un de l'autre de telle sorte que la fraction de son hydratée passant à travers la trémie doit passer entre les rouleaux.

3. Procédé selon la revendication 1 ou la revendication 2, dans lequel un rapport entre un temps de traitement dans

16

la chambre à micro-ondes et un temps de traitement dans la chambre d'hydratation va de 1:0,3 à 3:1.

4.  Procédé selon l'une quelconque des revendications 1 à 3, dans lequel le convoyeur comprend un ou plusieurs tapis roulant reliant la chambre d'hydratation à la chambre à micro-ondes.

5.  Procédé selon l'une quelconque des revendications 1 à 4, dans lequel la première étape de traitement est une hydratation à la vapeur pour augmenter une teneur en humidité de la fraction de son hydratée de 25 à 42 pour cent par rapport à la teneur en humidité de la fraction de son broyée.

6.  Procédé selon l'une quelconque des revendications 1 à 5, dans lequel une teneur en humidité de la fraction de son hydratée après la première étape de traitement va de 13 à 20 pour cent.

7.  Procédé selon l'une quelconque des revendications 1 à 6, dans lequel la fraction de son hydratée est constituée de particules ayant une taille de 200 à 1000 $\mu$m.

8.  Procédé selon l'une quelconque des revendications 1 à 7, dans lequel la deuxième étape de traitement assèche la teneur en humidité de la fraction de son traitée à 5 à 13 pour cent en poids.

9.  Procédé selon l'une quelconque des revendications 1 à 8, comprenant en outre le traitement de la fraction de son hydratée pour réduire une taille de particules d'agglomérats éventuels formés pendant le premier traitement à 200 à 1000 $\mu$m.

10. Procédé selon l'une quelconque des revendications 1 à 9, dans lequel la fraction de son broyée et la fraction de son hydratée sont traitées à une profondeur de lit de 0,5 à 3 cm pendant les première et deuxième étapes de traitement.

11. Procédé selon l'une quelconque des revendications 1 à 10, dans lequel la céréale complète est choisie dans le groupe constitué par le blé, l'avoine, l'orge, le maïs, le riz, le seigle, l'épeautre, le millet, le quinoa, le triticale, l'amarante, le tef, le maïs, le sarrasin, le boulgour, le sorgho et leurs mélanges.

*Fig. 1*

*Fig. 2*

*Fig. 3*

*Fig. 4*

**Fig. 5a**

**Fig. 5b**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101658205
- CN 101218938
- US 20090238935 A

**Non-patent literature cited in the description**

- **ROSE et al.** Enhanced lipid stability in whole wheat flour by lipase inactivation and antioxidant retention. *CEREAL Chemistry,* 2008
- **JONG, C. ; BADINGS, H. T.** Determination of Free Fatty Acids in Milk and Cheese Procedures for Extraction, Clean up, and Capillary Gas Chromatography Analysis. *Journal of High Resolution Chromatography,* 1990